# EUROPEAN PATENT APPLICATION

(11) **EP 3 587 986 A1**
(43) Date of publication of application: **01.01.2020**
(21) Application number: 18180025.1
(22) Date of filing: 27.06.2018
(51) Int. Cl.: F28D 20/02, H01F 27/08

(54) **COOLING ARRANGEMENT FOR A HIGH VOLTAGE POWER DEVICE**

(71) Applicant: ABB Schweiz AG, 5400 Baden (CH)
(72) Inventor: LANERYD, Tor, 745 93 Enköping (SE); KARIMI-MOGHADDAM, Giti, Hoffman Estates, IL Illinois 60192 (US)
(74) Representative: Kransell & Wennborg KB

(57) **Abstract**

The invention is concerned with a cooling arrangement for a high voltage power device (24) in an enclosure (10) and immersed in an insulating fluid (44). The arrangement comprises a cooling device for placing in the interior of the enclosure and having a channel (32) for the insulating fluid comprising a phase change material (34) for cooling insulating fluid (44) that passes through the channel. The invention is also concerned with a method of operating a valve of a cooling device in such a cooling arrangement.

## Description

### FIELD OF INVENTION

The present invention generally relates to high voltage power devices. The invention is more particularly concerned with a cooling arrangement for such a high voltage power devices as well as to a method of operating a valve of a cooling device in such a cooling arrangement and a high-voltage power arrangement comprising such a cooling arrangement.

### BACKGROUND

Heat losses that occur during operation of high voltage power devices in enclosures such as oil-immersed power transformers in transformer tanks cause an increase in temperature levels. This affects the expected life time of the high voltage power device, for example through the ageing of insulating materials. The temperature level at any given time depends on a number of variable parameters including the applied load, the ambient temperature, and the recent loading history. The ageing has an exponential dependence on the temperature level and it is therefore preferable to avoid high temperatures even during short intervals. The power device can be loaded higher than the nominal rating for a limited period of time without significant increase of ageing due to the thermal inertia of the system. It is desirable to increase this thermal inertia to allow for longer periods of overloading without significant increase of ageing.

One way of increasing the thermal inertia of an insulating fluid is through cooling it using phase change material.

The use of phase change material in the cooling of insulating fluid has for instance been discussed in CN 106653291, which discloses a transformer immersed in cooling oil in a tank. The cooling oil is passed out from the tank and through a heat exchange comprising phase change material (PCM).

Another example is given in EP 1238398B1, which discusses cooling of chillate used in a supplemental heat exchanger for a transformer in a tank. A heat exchanger that is based on PCM material is used to heat water of a power absorption chiller, which chiller in turns provides the chillate to the supplemental heat exchanger.

In CN 104362409 a battery in a tank is immersed in transformer oil. There are also heat pipes having evaporator ends stretching into the tank, where the heat pipes comprise phase change material. The heat pipes also extend outside of tank.

There is in view of what has been described above a need for an improvement in the cooling of an insulating fluid and especially one that can be used independently of the regular cooling of the insulating fluid and that does increase the size or bulkiness of the enclosure.

There is in view of the above mentioned documents a need for an improvement in the cooling of the insulating fluid using phase change material.

### SUMMARY OF THE INVENTION

One object of the present invention is therefore to provide a cooling arrangement using phase change material.

This object is achieved through a cooling arrangement for a high voltage power device in an enclosure for housing the high voltage power device immersed in an insulating fluid. The arrangement comprises a cooling device for placing in the interior of the enclosure and having a channel for the insulating fluid comprising a phase change material for cooling insulating fluid that passes through the channel.

The whole cooling device may be placed inside the enclosure with no parts extending out of it.

The above described enclosure may be a first enclosure being connected to a second enclosure comprising a main cooling system for the insulating fluid.

The cooling device may thereby be completely separated and independently operated from the main cooling system.

The cooling device may furthermore comprise a container including the phase change material, which container may be provided with a surface extension structure configured to increase an area of contact between the container and the insulating fluid. The surface extension structure may be a part of the container or it may be affixed to the container.

The container may more particularly have a front surface forming a first wall of the channel and the surface extension structure may comprise protrusions extending out or projecting out from the front surface into the channel, which projections may be made at right angles to the front surface

The cooling device may further comprise solid insulation around the first surface of the container as well as a second wall of solid insulation opposite of the first wall.

The channel may furthermore be vertically oriented in the enclosure. It may thus have as vertical extension and it may have a first opening at the top and a second opening at the bottom of the channel.

The phase change material may be configured to change between solid and liquid phases. It may also be paraffin, although other materials are also contemplated.

The first opening may be an entrance to the channel for the insulating fluid and the second opening may be an exit from the channel when the phase change material changes from the solid to the fluid phased, while the second opening may be an entrance to the channel and the first opening may be an exit from the channel when the phase change material changes from the fluid to the solid phase.

The cooling device may further comprise a valve connected to one end of the channel for regulating the flow of insulating fluid through the channel, which end may be at the first or at the second opening of the channel.

The cooling arrangement may furthermore comprise a control device connected to the valve and to sensors of the enclosure and the high voltage power device and configured to control the operation of the valve based on sensor signals obtained through the sensors.

According to one such control, the control device obtains sensor signals from the sensors, determines an overload mode based on the sensor signals, determines a maximum allowed time of the overload mode based on the sensor signals, predicts if the overload mode will extend beyond the maximum allowed time based on the sensor signals and opens the valve in case the overload mode is predicted to extend beyond the maximum allowed time.

A second aspect of the invention is concerned with a method of controlling a valve of a cooling device in a cooling arrangement, the cooling device being placed in the interior of an enclosure housing a high voltage power device immersed in an insulating fluid, the cooling device having a channel for the insulating medium comprising a phase change material for cooling insulating medium that passes through the channel and a valve regulating the flow of insulating fluid through the channel, the method comprising controlling the operation of the valve based on sensor signals obtained through said sensors.

The method may according to one variation comprise:
obtaining sensor signals from the sensors,
determining an overload mode based on the sensor signals,
determining a maximum allowed time of the overload mode based on the sensor signals,
predicting, based on the sensor signals, if the overload mode will extend beyond the maximum allowed time, and
opening the valve in case the overload mode is predicted to extend beyond the maximum allowed time.

The maximum allowed time may be associated with the main cooling system. It may more particularly be a time at which the overload mode may be occupied using only the main cooling system for cooling.

A third aspect of the invention is concerned with a high voltage power apparatus comprising a high voltage power device, an enclosure for housing the high voltage power device immersed in an insulating fluid and a cooling arrangement according to the first aspect.

The invention has a number of advantages. It enables the provision of additional cooling of the insulating fluid in order to increase the thermal inertia of the insulating fluid. This cooling is independent of any regular cooling made using radiators in radiator housings. Thereby a more flexible cooling is obtained. The additional cooling is thus made independently of any regular cooling. Moreover, because the cooling device is provided in the interior of the enclosure, the size and bulkiness of the container remains unaffected. There may also be no need for any additional insulation and/or shielding which could be required if the cooling device extended out of the enclosure.

### BRIEF DESCRIPTION OF THE DRAWINGS

The present invention will in the following be described with reference being made to the accompanying drawings, where
fig. 1 shows a side view of an enclosure for a high voltage power device in the form of a transformer tank connected to a cooling bank enclosure via two ducts,
fig. 2 schematically shows a view from above of the tank with a three-phase transformer as well as a number of cooling devices of a cooling arrangement for cooling an insulating fluid of the transformer tank,
fig. 3 schematically shows a cooling device in the tank together with a heat generating component of the transformer to be cooled,
fig,. 4 schematically shows a control device of the cooling arrangement connected to a number of sensors in- and outside of the tank as well as to a valve of the cooling device, and
fig. 5 shows a flow chart of a number of exemplifying method steps performed by the control device.

### DETAILED DESCRIPTION OF THE INVENTION

The present invention concerns a high voltage power device, such as a transformer like a power transformer, a power switch, a power converter, a reactor or an electrical motor, being cooled using insulating fluid, like transformer oil.

The invention is more particularly concerned with cooling arrangement for such a high voltage power device, which cooling arrangement comprises a cooling device. In some variations it also comprises a control device controlling a valve of such a cooling device. The invention is also concerned with a high voltage power apparatus comprising a high voltage power device, an enclosure for housing the high voltage power device and such a cooling arrangement.

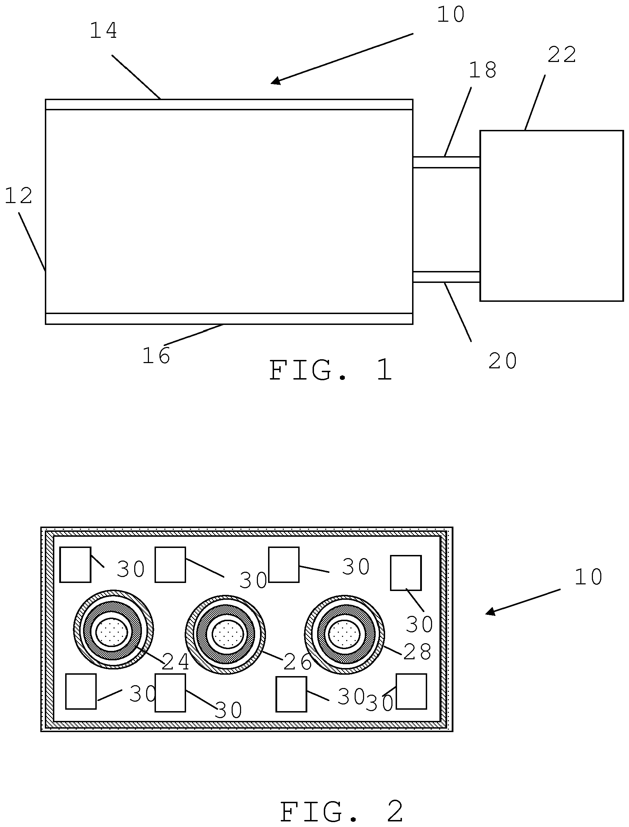

In fig. 1, there is shown a side view of an exemplifying first enclosure for housing such a voltage power device. As an example the high voltage power device is a transformer and therefore the first enclosure is a transformer tank 10. The transformer tank 10 has at least one wall 12, a lid 14 and a bottom 16. In the example given here the tank is shaped as a hexahedron or cuboid, such as a rectangular hexahedron or rectangular cuboid. Therefore there are four walls. It should however be realized that other shapes can exist, such as cylindrical, in which case there may be only one wall. The tank 10 which is to house a transformer is also to be filled with cooling and insulating fluid, such as transformer oil. Thereby the high voltage power device is immersed in insulating fluid. In order to cool this insulating fluid, the protection arrangement may also comprise a second enclosure 22 housing a main cooling system comprising a cooling bank comprising radiators for cooling the fluid. In the example given in fig. 1, the tank 10 is connected to the cooling bank radiators (not shown) in the enclosure 22 via a first and a second duct 18 and 20.

The loading performance of power transformers is described in loading guides, e.g. IEC 60076-7 and IEEE C57.91-2011. Two contributions to the maximum temperature level (also known as the hot spot temperature) can be considered: the temperature rise of the tank oil above the ambient, and the temperature rise of the heat generating components (such as the transformer windings) over the tank oil.

It is possible to increase the thermal inertia of any of these hot spot temperatures using phase change material (PCM).

However, the heat generating components, such as transformer windings, of the high voltage power device are typically designed to be very compact and there is no available space for PCMs. Adding space for PCMs would significantly increase the cost of the high voltage power device. Furthermore, the heat generating components are typically subjected to high voltage and require electrical insulation which may also make it difficult to install PCMs in the immediate vicinity. A high voltage may in this case be a voltage of above 100 kV, for instance above 400 kV.

On the other hand, the tank 10 typically has available space where PCMs can be installed. Therefore the thermal inertia of the hot spot can be increased by increasing the thermal inertia of the tank oil.

Therefore, according to aspects of the invention. the thermal inertia of the insulating fluid is increased using PCM.

Cooling devices based on PCM material are therefore being introduced in the tank for increasing the thermal inertia of the insulating fluid, here in the form of tank oil.

This is schematically shown in fig. 2, which is a view from above of the tank 10 in fig. 1 (without the lid).

Fig. 2 more particularly shows the tank 10 with the high voltage power device as a three-phase transformer realized as a first, second and third separate transformer 24, 26 28; one for each phase of an Alternating Current (AC) three-phase system, wherein each such transformer may be realized through a core surrounded by primary and secondary windings. It is also possible with further windings, such as windings used for tap changer operation. These transformers 24, 26 and 28 are typically cylindrically shaped. In the tank 10 there are also a number cooling devices 30. There is a cooling device 30 at each corner of the tank as well as along a first and a second long side in-between two transformers. Thereby there are eight cooling devices 30 in the tank 10. It should be realized that the placing and number of cooling devices 30 is merely exemplifying. A cooling device 30 may be placed anywhere in the enclosure 10 where it is possible fit it. The shown locations are useful when the transformers 24, 26 and 28 have cylindrical shapes in a tank 10 formed as a hexahedron. When other shapes are involved other numbers and placings of cooling devices can naturally be used. The cooling devices used are based on phase-change materials (PCM).

A phase change material (PCM) is a substance with a high heat of fusion which is capable of storing and releasing large amounts of energy. Heat is absorbed or released when the material changes from one phase to another. At temperatures away from phase transition, the solid-liquid PCMs behave like sensible heat storage (SHS) materials; their temperature rises as they absorb heat. Unlike conventional SHS, however, when PCMs reach a critical temperature, known as their phase change temperature, they change phase. During the phase change process, they absorb large amounts of thermal energy at an almost constant temperature. The PCM continues to absorb heat without a significant variation in temperature until all the material is transformed to liquid phase. When the temperature around a liquid material reduces, the PCM solidifies, releasing its stored latent heat and returns to its initial solid phase.

A large number of organic and non-organic PCMs are commercially available. The common types of PCM are solid to solid phase change material (SSPCM), solid to liquid phase change material (SLPCM), and liquid to gas phase change material (SGPCM). To apply SLPCM and LGPCM suitable encapsulations or enclosures are required so that PCM does not flow away after phase transition occurs.

According to aspects of the invention, the PCM material used is an SLPCM material.

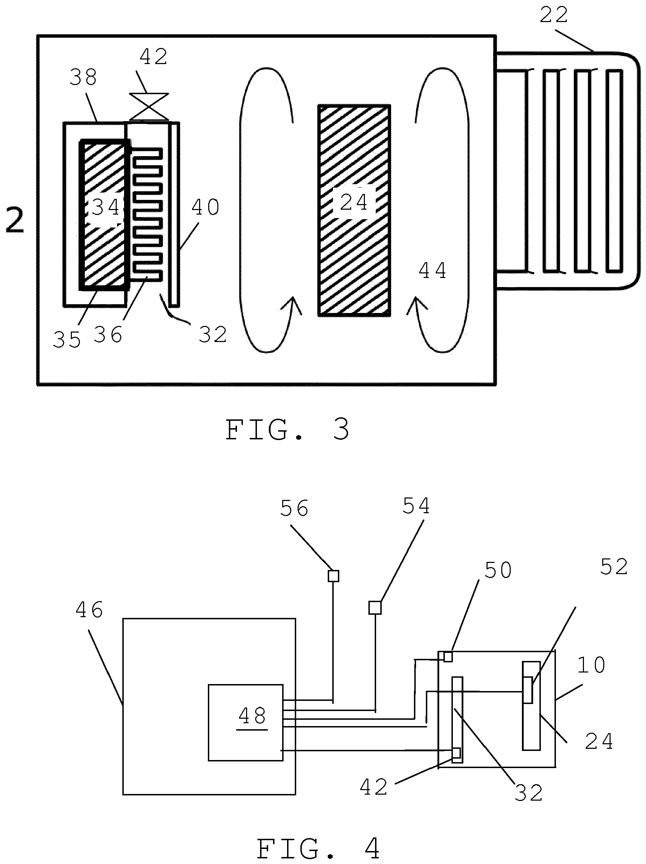

One embodiment of a cooling device in a tank filled with insulating fluid in the form of transformer oil 44 together with a corresponding transformer 24 is depicted in Figure 3. In the figure the second enclosure 22 with the main cooling system for cooling the circulated transformer oil is also shown.

The cooling device 30 is placed in the interior of the tank 10 in order to be surrounded by transformer oil 44 and also immersed in it. The cooling device 30 more particularly has a channel 32 comprising phase change material 34 for cooling insulating fluid that passes through the channel 32. The channel 32 is vertically oriented in the interior of the transformer tank 10. The channel 32 thus has an essentially vertical extension in the tank 10. There is more particularly a first opening at the top and a second opening at the bottom of the vertically oriented channel 32. The channel 32 may be seen as a duct through which the insulating fluid may flow. In order to provide the channel, the duct has a first wall comprising phase change material and a second opposite wall 40. The phase change material 34 may more particularly be placed in a container 35, which container 35 has a front surface forming the first wall to be used for cooling and facing the second wall 40. The container 35 also comprises back and side surfaces, which back and side surfaces are surrounded by solid insulation material 38, for instance of plastic material or cellulose. Thereby solid insulation material is placed around the front surface of the container 35, which front surface is in contact with insulating fluid passing through the channel 32. Also the second wall 40 is made of solid insulation material, such as plastic or cellulose, and between the two walls there is thus defined a passage for the insulating fluid, which passage forms the channel 32. The container 35 is made of a material having a high thermal conductivity, such as a metal like aluminum and the front surface is connected to or provided with a surface extension structure 36 or heat sink, which surface extension structure may be realized as fins or projections projecting or extending out from the front surface of the container 35 towards the second wall 40. The projections may be made at right angles to the front surface. Thereby the projections may be essentially horizontally oriented. Thereby the surface that the insulating fluid gets in contact with in the channel is also made larger or is extended, i.e. the area of contact between the insulating fluid and the container 35 is increased, which provides effective cooling. The fins or projections of the surface extension structure 36 are also made of a material having a high thermal conductivity, for instance of the same material as is used for the container 35.

The first opening may be an entrance to the channel for the insulating fluid and the second opening may be an exit from the channel when the phase change material changes from the solid to the fluid phase, while the second opening may be an entrance to the channel and the first opening may be an exit from the channel when the phase change material changes from the fluid to the solid phase.

Thereby a problem of the PCMs having a low thermal conductivity where only a thin layer will undergo phase change during cooling is addressed.

There is also a valve connected to one end if the channel 32 for regulating the flow of insulating fluid through the channel.

In the embodiment shown in fig. 3, this valve 42 is connected to the first opening of the channel 32 at the top. The valve 42 may be operated by a control device or self-regulated in order to allow the insulating fluid 44 to enter the channel and be cooled by the phase change material.

The three-phase transformer comprises a number of heat generating components, which in fig. 3 is exemplified by the transformer 24.

Put differently, the heat generating component 24 is thus placed in an enclosure 10 that may be fitted with external cooling equipment 22 and immersed in an insulating fluid. The enclosure 10 is thereby filled with a circulating dielectric insulating fluid 44 such as mineral oil, natural esters, synthetic esters, isoparaffin, or similar. The enclosure 10 includes a cooling device comprising a container 35 with a phase change material 34 and with a surface extension structure 36 that will improve heat exchange between the phase change material and the dielectric insulating fluid. A barrier 40 defines a duct 32 where the dielectric liquid can flow past the surface extension. The phase changing material may otherwise be insulated from the dielectric fluid by an insulating wall 38. A valve 42 may be used to regulate the flow of dielectric liquid through the duct 32.

The advantage of having the valve 42 is that the latent heat of the PCM can be used when it is needed. The valve may be a mechanical valve that can be remotely controlled, but it may also be self-regulating, for instance constructed out of a phase changing material that allows the dielectric fluid to pass through when it reaches a certain temperature.

As an alternative, the valve may be located in the bottom of the channel at the second opening. This allows cool dielectric liquid to enter the duct from the top during a cool down phase even if the valve is closed, but blocks dielectric liquid from below during a heating up phase.

Advantageously, the phase changing material changes between solid and liquid phases and may be paraffin (melting point 37 °C) or another material with relatively low melting point.

As was mentioned earlier, the cooling device is provided for additional cooling of the insulating fluid in order to increase the thermal inertia of the insulating fluid, which cooling is independent of the regular cooling made using the radiator in the radiator housing 22. Thereby a more flexible cooling is also obtained. The additional cooling is thus made independently of the regular cooling. Moreover, because the cooling device 30 is provided in the interior of the tank 10, the size and bulkiness of the tank remains unaffected. The cooling device does also not need any additional insulation and/or shielding which could be required if it extended out of the tank.

As was mentioned above it is possible to operate the high voltage power device at overload, such as 20& or 40% overload for a limited amount of time. The additional cooling may be advantageous to use at such overload situations.

One difficulty in the cooling of the high voltage power device is that it may be operating at a high temperature even before the overloading period. For example a transformer may be initially overloaded 20% above nominal rating for a few hours, and then be subjected to an additional overload of 40%. If the PCMs have already been exposed to high temperature, the latent heat may not be available to increase the thermal inertia during the latter overloading period where it would be the most effective for reducing ageing. The solution to such a problem is to insulate the PCMs from the tank oil, and control the timing when oil is allowed to pass the surface extension structure 36, which is done using the valve 42 and a control device.

Additional cooling may thus be of interest at different times, such as when the high voltage power device is expected to reach too high a temperature. For this reason the cooling arrangement may comprise a control device that controls the cooling device and more particularly controls the opening and closing of the valve of the cooling device.

Fig. 4 shows a block schematic of such a control device 46 comprising a control unit 48 performing a control function of opening and closing the valve 42. The control device 46 may be realized as a computer or processor with computer program code which performs the above-mentioned control functionality. As an alternative it may be realized in the form of discrete components, such as one or more Field Programmable Gate Arrays (FPGAs), Application Specific Integrated Circuits (ASICs) or Digital Signal Processors (DSPs). However, it may also be implemented in the form of a processor with accompanying program memory comprising computer program code that performs the desired control functionality when being run on the processor.

The control unit 48 is connected to a number of sensors. It may be connected to a top oil temperature sensor 50 in the tank 10, to a temperature sensor 52 in the high voltage power device 24, to an ambient temperature sensor 54 sensing the temperature around the tank 10 and to a load sensor 56. The load sensor is a sensor sensing the electrical load of the high voltage power device, for instance through detecting the current. This sensor could be connected to the high voltage power device. However, it may be preferred to have it connected to other electrical elements, such as a bus bar leading to or from the high voltage power device.

The control unit 48 obtains measurements in sensor signals from the various sensors 50, 52, 54 and 56 and determines to open or close the valve 42 based on these measurements. It may more particularly perform various system predictions based on the measurements, which system predictions may involve predictions about operational mode of the high voltage power device 24, which mode may involve a regular loading mode and one or more overload modes. In the case of overload mode, it may also determine a maximum allowed time at which the overload mode may be occupied using only the main cooling system. This determination or prediction may be performed based on sensor signals with the above-mentioned measurements and knowledge about nominal operation. Normal or regular load may for instance be known in advance. Predictions may also be performed using a Reduced Order Model i.e. a dynamic thermal model of the system (tank, oil and high voltage power device). Examples of such a determination is given in EP 3299783, which is herein incorporated by reference.

The control unit 48 may more particularly investigate if one or more conditions for opening the valve are fulfilled. If for instance the difference between the top oil temperature and the surrounding temperature is above a first threshold then one condition for opening the valve may be fulfilled. In this it is also possible to consider the load, for instance through detecting the current through the high voltage power device. A load that is high may be another condition for opening the valve. It is also possible to consider conditions for closing an open valve. If for instance the temperature falls below a second threshold then a condition for closing the valve may be fulfilled. A load that is low may be another condition for closing the valve. Another possible element that may have an influence on the opening and/or closing of the valve is the predicted operation of the high voltage power device. It is for instance possible that the high voltage power device is part of an industrial process that has a scheduled operation. In this case it is possible that the valve will not be opened even though one or two of the previously mentioned conditions are being fulfilled if it is known that the scheduled operation is going to stop, but will be opened if operation is known to continue for a time. It is also possible to consider external influences such as weather in the determining of the opening or closing of the valve. It is also possible to consider load statistics and thereby to predict if a condition for operating the valve will appear or not.

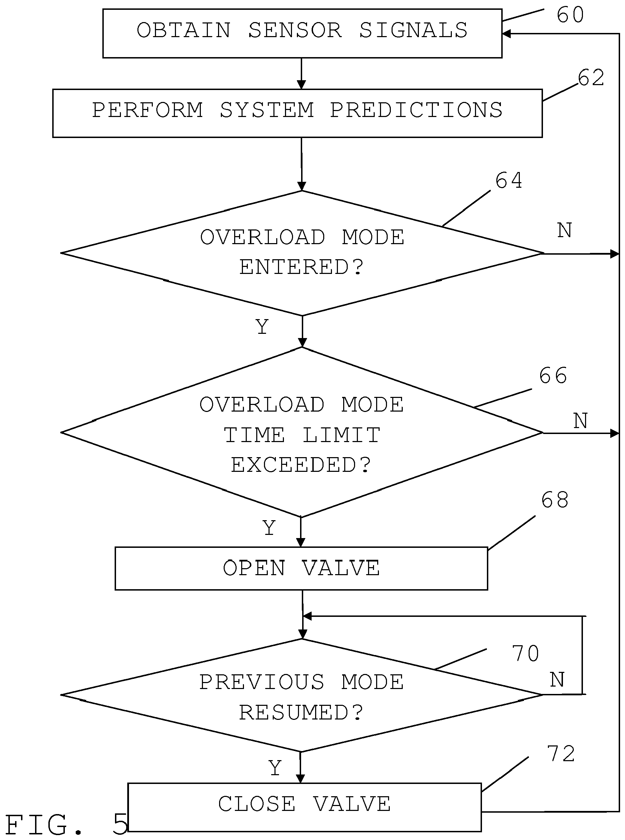

One example of operating the control unit 48 is schematically shown in a flow chart in fig. 5. Here it is assumed that additional cooling is needed if the high voltage power device is operated in an overload mode, which may be previously discussed 20% overload or 40% overload. It is furthermore assumed that this mode is allowed to be operated for a maximum allowed time of overload using the main cooling system. It is finally assumed that the valve 42 is initially closed and hence than no additional cooling is being performed.

The control unit 48 first obtains sensor signals with measurements from the various sensors 50, 52, 54 and 56, step 60. It also performs various system predictions based on the sensor signals with measurements, step 62, which system predictions may involve predictions or determinations about operational mode of the high voltage power device 24, which mode may involve a regular loading mode, and one or more overload modes. In the case of overload mode, it may also determine a maximum allowed time at which the overload mode may be run only using the main cooling system. The predictions relating to overload modes may also comprise predictions about how long such overload modes may be in place.

In the example in fig. 5 the control unit 48 more particularly investigates if the high voltage power device has entered into an overload mode, which may be done through determining that the hot spot temperature of the high voltage power device 24 exceeds a first temperature threshold and that the load is above a load threshold. It may thereby determine that the high voltage power device is in an overload mode based on the sensor signals. In case the overload mode has not been entered, step 64, the control unit 48 returns and obtains sensor signals, step 60 and performs system predictions, step 62.

However, if the overload mode had been entered, step 64, the control unit 48 continues and investigates an operational limit, i.e. a maximum allowed time of the overload operation only using the main cooling system. It more particularly investigates if the prediction of the length of the overload mode will lead to the operational limit being exceeded.

If the operation limit is deemed not to be exceeded, step 66, the control unit 48 returns and obtains sensor signals, step 60, and performs system predictions, step 62. However, if the operational limit is predicted to be exceeded beyond the maximum allowed time, step 66, i.e. the overload mode is predicted to continue for too long, then the control unit 48 opens the valve 42, step 68.

Thereafter the control unit 48 investigates if the previous mode has resumed, i.e. if the mode before the overload mode was entered is again in place. The previous mode may as an example be the regular loading mode.

The return to the previous mode may occur if the temperature difference and/or load level decrease below corresponding thresholds.

If it has not, step 70, the control unit 48 then waits for the previous mode to be resumed and when the previous mode resumes because of the additional cooling and/or a load change, step 70, the control unit 48 closes the valve 42, step 72, whereupon obtaining of sensor signals, step 60, and performing of predictions are resumed, step 62.

When the valve is open the insulating fluid in the channel 32 is cooled by the phase change material 34 via the container 35 with surface extension structure 36. Thereby it is possible to obtain the above-mentioned additional cooling of the high voltage power device independently of the use of the main cooling system. The additional cooling may be made momentaneously at operational peaks, which has the advantage of prolonging the lifetime of the insulating fluid.

From the foregoing discussion it is evident that the present invention can be varied in a multitude of ways. It is for instance possible that other materials than paraffin may be used as phase change material. Alternatives comprise Polyglycol and Caprylic acid.

It shall consequently be realized that the present invention is only to be limited by the following claims.

## Claims

1. A cooling arrangement for a high voltage power device (24, 26, 28) in an enclosure (10) for housing the high voltage power device immersed in an insulating fluid (44), the arrangement comprising a cooling device (30) for placing in the interior of the enclosure and having a channel (32) for the insulating fluid comprising a phase change material (34) for cooling insulating fluid that passes through the channel.

2. The cooling arrangement according to claim 1, the cooling device (30) further comprising a container (35) including the phase change material, said container (35) having a surface extension structure (34) configured to increase an area of contact between the container (35) and the insulating fluid.

3. The cooling arrangement according to claim 2, wherein the container (35) has a front surface forming a first wall of the channel and the surface extension structure comprises protrusions extending out from the front surface into the channel.

4. The cooling arrangement according to any previous claim, the cooling device further comprising solid insulation (38) around the first surface of the container (35).

5. The cooling arrangement according to claim 3 or 4, the cooling device (30) further comprising a second wall (40) of solid insulation opposite of the first wall.

6. The cooling arrangement according to any previous claim, wherein the channel (32) is vertically oriented in the enclosure (10).

7. The cooling arrangement according to any previous claim, wherein the phase change material (34) is configured to change between solid and liquid phases.

8. The cooling arrangement according to any previous claim, the cooling device (30) further comprising a valve (42) connected to one end of the channel (32) for regulating the flow of insulating fluid through the channel (32).

9. The cooling arrangement according to claim 8, wherein the valve (42) is placed at a first opening at the top of the channel.

10. The cooling arrangement according to claim 8, wherein the valve is placed at a second opening at the bottom of the channel.

11. The cooling arrangement according to any of claims 9 - 11, further comprising a control device (46) connected to the valve (42) and to sensors (50, 52, 54, 56) of the enclosure and the high voltage power device and configured to control the operation of the valve (42) based on sensor signals obtained through said sensors.

12. The cooling arrangement according to claim 12, wherein the control device (46) is configured to obtain sensor signals from the sensors, determine an overload mode based on the sensor signals, determine a maximum allowed time of the overload mode based on the sensor signals, predict if the overload mode will extend beyond the maximum allowed time based on the sensor signals and to open the valve (42) in case the overload mode is predicted to extend beyond the maximum allowed time.

13. A high voltage power apparatus comprising a high voltage power device (24, 26, 28), an enclosure (10) for housing the high voltage power device immersed in an insulating fluid (44) and a cooling arrangement according to any of claims 1 - 12.

14. A method of controlling a valve of a cooling device (30) in a cooling arrangement, said cooling device (30) being placed in the interior of an enclosure (10) housing a high voltage power device (24, 26, 28) immersed in an insulating fluid (44), said cooling device (30) having a channel (32) for the insulating medium comprising a phase change material (34) for cooling insulating medium that passes through the channel and a valve (42) regulating the flow of insulating fluid through the channel (32), the method comprising controlling the operation of the valve based on sensor signals obtained through said sensors.

15. The method according to claim 14, wherein the controlling of the operation of the valve based on measurements obtained through said sensors comprises:
obtaining (60) sensor signals from the sensors,
determining (64) an overload mode based on the sensor signals,
determining (62) a maximum allowed time of the overload mode based on the sensor signals,
predicting (66), based on the sensor signals, if the overload mode will extend beyond the maximum allowed time, and
opening (68) the valve in case the overload mode is predicted to extend beyond the maximum allowed time.
